# EUROPEAN PATENT APPLICATION

(11) **EP 4 694 147 A1**
(43) Date of publication of application: **11.02.2026**
(21) Application number: 25188910.1
(22) Date of filing: 10.07.2025
(51) Int. Cl.: H04N 21/431, H04N 21/6336, H04N 21/6377, H04N 21/81, H04N 21/234

(54) **MULTI-STREAM CONTENT DELIVERY TO LOW-END DEVICES**

(30) Priority: 07.08.2024 US 202418797200
(71) Applicant: Synamedia Limited, Maidenhead SL6 7BZ (GB)
(72) Inventor: TEREM, Amotz, 9618118 Jerusalem (IL); NIMROD, Reuven, 9079377 Jerusalem (IL); FRUCHTER, Avi, 9090900 Neve Daniell (IL)
(74) Representative: IK-IP LTD

(57) **Abstract**

Techniques for multi-stream content delivery are described herein. In various embodiments, at least one server hosting a cloud computing platform renders a user interface for a client device, where the user interface includes low latency content and buffered content. The server then identifies display properties of the buffered content in the user interface and encodes the low latency content into a low latency stream. The server also streams the user interface to the client device, including transmitting to the client device the low latency stream, separate and distinct from a buffered content stream for delivering the buffered content to the client device. The server additionally signals the client device the display properties of the buffered content for playback of the low latency stream and the buffered content at the client device.

## Description

### TECHNICAL FIELD

The present disclosure relates generally to multimedia content delivery and, more specifically, to delivering multimedia content through multiple streams to low-end devices.

### BACKGROUND

A low-end device or a thin client typically has limited resources, such as the absence of a graphics processing unit (GPU) and/or limited storage. For optimal performance, some systems render graphics for thin client devices on a secondary device, e.g., a cloud television (TV) user interface (UI) rendering platform. In such systems, the cloud renders UIs and delivers the rendered videos to low-end devices for decoding and display. In cloud-based TV UI rendering platforms, where UIs are rendered in the cloud, it is challenging to deliver videos interlaced with UI elements to low-end devices, e.g., streaming quarter screen previews, event or trick mode banners, etc.

The challenge stems from balancing the conflicting need for resiliency and high responsiveness (i.e., low latency) to deliver the media content over networks that may have interruptions. For example, it is bothersome to an end user when the video and/or audio in a UI has a glitch or freeze. At the same time, the end user often finds it bothersome when there is a slow response to the UI while neglecting a missing UI frame. In another example, for videos, it is unnecessary to have high responsiveness; and video content can be buffered to recover from network disruptions for smooth playback. In contrast, for applications rendering and delivering UI elements, the end user would prefer real-time responsiveness with lower quality (or even skip a frame) rather than a delay (or buffering). As such, it is difficult to deliver a single stream for both high-quality videos (e.g., no interruptions) and highly responsive UIs.

### BRIEF DESCRIPTION OF THE DRAWINGS

So that the present disclosure can be understood by those of ordinary skill in the art, a more detailed description may be had by reference to aspects of some illustrative embodiments, some of which are shown in the accompanying drawings.
Figure 1 is a block diagram illustrating an exemplary multi-channel media content delivery system, in accordance with some embodiments;
Figure 2 is a diagram illustrating one embodiment of multi-stream content delivery to a low-end device, in accordance with some embodiments;
Figure 3 is a diagram illustrating another embodiment of multi-stream content delivery to a low-end device, in accordance with some embodiments;
Figure 4 is a diagram illustrating yet another embodiment of multi-stream content delivery to a low-end device, in accordance with some embodiments;
Figures 5A and 5B are diagrams illustrating signaling for synchronization in the exemplary multi-stream content delivery system, in accordance with some embodiments;
Figure 6 is a flowchart illustrating a multi-stream content delivery method, in accordance with some embodiments; and
Figure 7 is a block diagram of a computing device for multi-stream content delivery, in accordance with some embodiments.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method, or device. Finally, like reference numerals may be used to denote like features throughout the specification and figures.

### DESCRIPTION OF EXAMPLE EMBODIMENTS

Numerous details are described in order to provide a thorough understanding of the example embodiments shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices, and circuits have not been described in exhaustive detail so as not to obscure more pertinent aspects of the example embodiments described herein.

### OVERVIEW

Methods, devices, and systems described herein rely on a thin client device (e.g., a low-cost device with no GPU and/or low processing and storage capacity, etc.) for receiving cloud-rendered user interfaces (UIs) with UI elements and embedded videos. In some embodiments, the cloud platform sends the cloud-rendered UIs over multiple streams, each stream with different configurations. For instance, one stream is configured for UI elements without buffered content, and another stream is configured for buffered videos. On the receiving end, in some embodiments, the thin client device has one decoder with a deep buffer for the embedded videos and another decoder with a shallow or no buffer for the UI elements, thus keeping the cost low. In some embodiments, the decoder for the UI elements provides lower resolution support, e.g., decoding a series of images such as motion JPEGs. The multi-stream communication described herein thus allows the cloud to simultaneously stream low latency content for UI responsiveness and video playback content, which requires buffering for better resiliency.

In accordance with various embodiments, a multi-stream content delivery method is performed at a server that includes one or more processors and non-transitory memory, e.g., at least one server hosting a cloud computing platform for television (TV) user interface (UI) rendering. The server renders a user interface for a client device, where the user interface includes low latency content and buffered content. The server then identifies display properties of the buffered content in the user interface and encodes the low latency content into a low latency stream. The server also streams the user interface to the client device, including transmitting to the client device the low latency stream, separate and distinct from a buffered video channel for delivering the buffered content to the client device. The server additionally signals the client device the display properties of the buffered content for playback of the low latency stream and the buffered content at the client device.

### EXAMPLE EMBODIMENTS

Methods, devices, and systems described herein render user interfaces (UIs) in the cloud for low-end devices, where the UIs include UI elements interlaced with videos. The cloud in accordance with various embodiments prepares multiple streams, e.g., extracting different types of content and/or encoding according to different bitrates, and simultaneously delivers (or simultaneously signals the delivery of) the multiple streams to the client side. The separate content preparation and the multi-stream content delivery enable the systems described herein to provide high responsiveness for UI interactions while delivering high quality videos with resiliency against potential network interruptions.

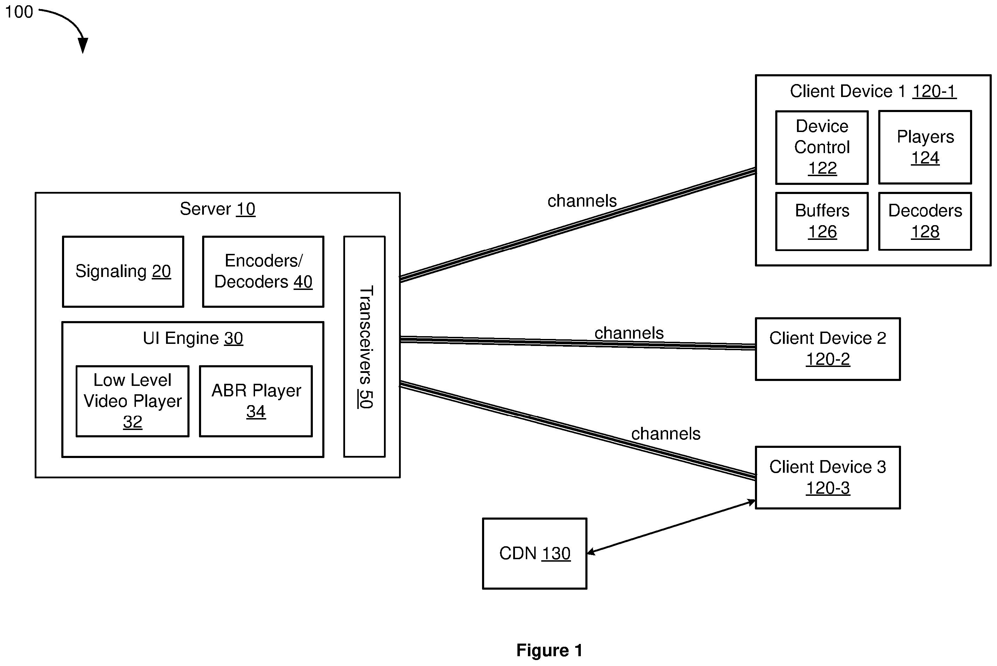

Reference is now made to Figure 1, which is a block diagram of an exemplary multimedia content delivery system 100 that enables simultaneous multi-stream content delivery to low-end devices in accordance with some embodiments. The multimedia content (also referred to hereinafter as "media content", "media content item(s)", "media asset", or "content") can include any multimedia data, such as visual data, audio data, and/or text, etc. In some embodiments, the content delivery system 100 includes a server 10 for preparing and streaming media content and a client side for receiving and playing the media content. In some embodiments, a respective client device 120 is connected to and/or coupled with a display device for displaying the media content. In some embodiments, the multimedia content delivered by the cloud computing platform 10 includes adaptive bitrate (ABR) videos (also known as "buffered content" or "buffered videos") and/or low latency user interface (UI) videos (also known as "low latency content", "UI videos", "application video streams", "or application videos"). To prepare the media content, the cloud computing platform 10 can apply any number of video/audio packaging techniques following any standards.

As used herein, buffered content typically uses a relatively large buffer on client devices to allow for retries. Also as used herein, low latency UI videos are typically delivered over a low latency video protocol that is different from the protocol for delivering the buffered content. In contrast to the streaming protocols for buffered content, which favor reliability over speed and have a latency at the magnitude of seconds, low latency video protocols are able to deliver content in the magnitude of milliseconds for uninterrupted user experience. To facilitate the simultaneous streaming of both the buffered content and the low latency content, in some embodiments, the server 10 includes a signaling unit 20, an UI engine 30, encoders/decoders 40, and transceivers 50.

In some embodiments, the signaling unit 20 establishes connections and/or sessions with a plurality of client devices 120 (e.g., client device 1 120-1, client device 2 120-2, and client device 3 120-3, etc.) on the client side via the transceivers 50. Through the established connections, commands, configurations, messages, user inputs, application controls, media content, states, display properties, locations, event notifications, and/or licenses are exchanged between the server side and the client side. In some embodiments, the connections and/or session(s) established with the client devices 120 for signaling are through different channel(s) from the channel(s) transmitting the audio/video content. In some other embodiments, the multiple streams and/or channels for the audio/video content and/or the signaling are multiplexed into a single channel for delivery. For example, a stream for the low latency content without the buffered content can be separate and distinct from a buffered content stream for the buffered content without the UI element. Yet the low latency stream (carrying the UI elements without the embedded ABR video) and the buffered content stream (carrying the embedded ABR video) can be delivered over a single or separate connections to the client side, e.g., multiplexed and delivered over one connection with one pair of sending and listening sockets or through multiple channels and/or connections.

In some embodiments, a respective client device 120 is a set-top-box (STB) connected to or coupled with a television (TV) or any computing device that is capable of decoding and playing videos outputted to a respective display. It should be noted that, a respective client device 120 can be separate and distinct from a respective display or combined with a respective display, e.g., a smart TV and/or a computing device with a display. In some embodiments, an exemplary client device, such as the client device 120-1, includes a device control unit 122 for negotiating and managing connections, sessions, streams, and/or channels, players 124 for receiving and playing media content, buffers 126 for storing the media content for playout, and decoders 128 for decoding/decrypting the media content. Though not shown in Figure 1, each of the client devices 120 can connect to the server 10 through one or more wired or wireless connections and each of the client devices 120 can have one or more transceivers for communicating with the server 10 and/or the CDN 130 directly or indirectly.

In some embodiments, the client device 120 configures one of the buffers 126 for storing the low latency content and another one for storing the buffered content. As such, different buffers 126 can be configured for different types of content and configured with different depth. For example, upon determining that the received content is low latency content, the client device 120 configures a buffer depth less than a first threshold or zero for a respective buffer 126 to store the low latency content. In another example, upon determining that the received content is buffered content, the client device 120 configures a buffer depth greater than a second threshold for a respective buffer 126 to store the buffered content.

In some embodiments, one of the decoders 128 is a buffered content decoder for decoding buffered content, and another one of the decoders 128 is a low latency content decoder for decoding low latency content. As such, the client device 120 uses different decoders 128 for decoding different content that is encoded according to different bitrates, e.g., the low latency content decoder for decoding the low latency video encoded according to a first bitrate and the buffered content decoder for decoding the buffered video encoded according to a second bitrate, different from the first bitrate. In some embodiments, the low latency content decoder on the client device 120 is configured to have a low buffer or no buffering, with lower resolution support, and/or decode series of images such as motion JPEGs, thus requiring lower processing and memory on the client device 120. The low buffer or no buffering also allows the UI section on the screen to provide fast response to user interactions while the video section on the screen plays with good quality.

In some embodiments, in addition to facilitating communication with the server 10, the device control unit 122 is configured to obtain user inputs, buffer depth, current playout position, next available boundaries, and/or states, etc., and send such information to the server side. In some embodiments, the device control unit 122 is also configured to receive messages and/or application controls, e.g., switch points, switch policies from the server side for synchronization of ABR playback and low latency UI videos. Based on the received messages and/or application controls, in some embodiments, the device control unit 122 manipulates pointers in the buffers 126 so that the playback of the video is continuous and smooth.

In some embodiments, the server 10 communicates with the client side using multiple streams. For example, when using WebRTC as the communication protocol, the signaling unit 20 establishes an audio/video channel between the server 10 and a respective client device 120. The signaling unit 20 then manages the transmission of audio/video data through one of the transceivers 50 over the audio/video channel. In another example, the signaling unit 20 also facilitates the establishment of a WebRTC data channel as an additional channel to the audio/video channel for signaling. The WebRTC data channel allows for bidirectional communication of data through another transceiver 50 between the server 10 and the respective client device 120. For instance, the server 10 receives inputs and states, etc., and sends display properties, configurations, messages, and application controls, etc. In some embodiments, instead of using WebRTC data channel, the server 10 and the client side use Real-time Transport Protocol (RTP) and/or other low latency content delivery protocol(s) for signaling. For example, instead of using the WebRTC data channel, the server 10 can signal the client device 120 the display properties on the codec level (e.g., as an NAL unit) or on the network protocol, such as in a Real-Time Transport Protocol (RTP) extension header.

In the exemplary system 100, multiple streams are communicated between the server side and the client side for different types of audio/video data in accordance with various embodiments. In some embodiments, one stream is for communicating low latency content, e.g., UI video/audio data in a low latency stream, and another stream is for communicating buffered content, e.g., ABR video/audio data in a buffered content stream. When any one of the client devices 120 sends a request for a UI, which includes both UI elements and an embedded video, the UI engine 30 renders the UI, e.g., by executing one or more applications for UI rendering. An application as used herein refers to an executable program, or a listing of instructions for execution, that defines and outputs a UI for display on a display device. In some embodiments, the UI engine 30 caches rendered UI objects and utilizes the cached rendered UI objects for compositing UI elements in requested UIs.

In some embodiments, the UI engine 30 includes a low level video player 32 for extracting a low latency UI video, e.g., a video including the UI elements in the rendered UI. As will be described in further detail below, in some embodiments, the low level video player 32 also extracts buffered content from the rendered UI. The low level video player 32 then provides the low latency UI video and/or the buffered video to respective encoders/decoders 40 for encoding. For example, among the encoders/decoders 40, a low latency encoder/decoder can encode or re-encode the low latency content extracted by the low level video player 32 to a low latency video and send it to the client device 120 by one of the transceivers 50 over a low latency video channel and/or in a low latency stream. In another example, among the encoders/decoders 40, a high latency encoder/decoder can encode or re-encode the buffered content to an ABR video and send to the client device 120 by one of the transceivers 50 over a buffered video channel and/or in a buffered content stream.

In some embodiments, the low level video player 32 also identifies display properties of the buffered content in the UIs and packages the display properties for transmission by the transceivers 50. In some embodiments, the display properties of the buffered content indicate what buffered content to play, where to position the buffered content in the UI, e.g., the video location, and how to place the buffered content, e.g., the width and/or height, etc., and/or where to obtain the buffered content, e.g., a playable URL from a content delivery network (CDN), etc.

In some embodiments, the UI engine 30 also includes an adaptive bitrate (ABR) player 34 for playing buffered content to the UI engine 30 to facilitate the rendering of the requested UIs by the UI engine 30. In such embodiments, the ABR player 34 obtains the display properties of the buffered content when playing the buffered content to the UI engine 30 and signals the client device 120 the display properties in accordance with some embodiments. For example, in Figure 1, the ABR player 34 signals client device 3 120-3 the URL of the buffered content. In response, client device 3 120-3 requests the buffered content from a CDN 130 and plays the buffered content along with the low latency video received from the server 10. As such, the signaling triggers the client device 3 120-3 to decode the low latency stream and the buffered content stream and blend the streams according to the display properties.

It should be noted that although a single server 10, a single signaling unit 20, a single UI engine 30, a single low level video player 32, and a single ABR player 34 are illustrated in Figure 1, the system 100 may include one or more instances of such components, e.g., multiple servers hosting virtual machines running on top of CPU(s) and/or GPU(s) supporting pool(s) of UI engines 30 for UI rendering. For the sake of simplicity, the subject matter will be described hereinafter for the most part with reference to a single server 10, a single signaling unit 20, a single UI engine 30, a single low level video player 32, and a single ABR player 34.

Further, one or more components and/or functions of the components illustrated in Figure 1 may be distributed and/or re-arranged. For example, the low level video player 32 and/or the ABR player 34 can be parts of the UI engine 30 or as separate components coupled with the UI engine 30. As such, the server side and/or the client side of the content delivery system 100 can include more, less, and/or different elements than shown in Figure 1. Each of the component in the content delivery system 100 can include appropriate hardware, software, and/or firmware to perform the operations attributed to the element herein. Additionally, as described above, though Figure 1 illustrates multiple channels between the server 10 and each of the client devices 120, the multiple channels can be separate and distinct or combined (e.g., multiplexed) into one stream, channel, and/or connection. Through the transceivers 50 and the transceivers on the client devices 120, one or more sets of sockets can be configured for the one or more channels. Operation(s) attributed to an element in the content delivery system100 herein should not be considered binding and in some embodiments, other element(s) in the exemplary system 100 may additionally or alternatively perform such operation(s).

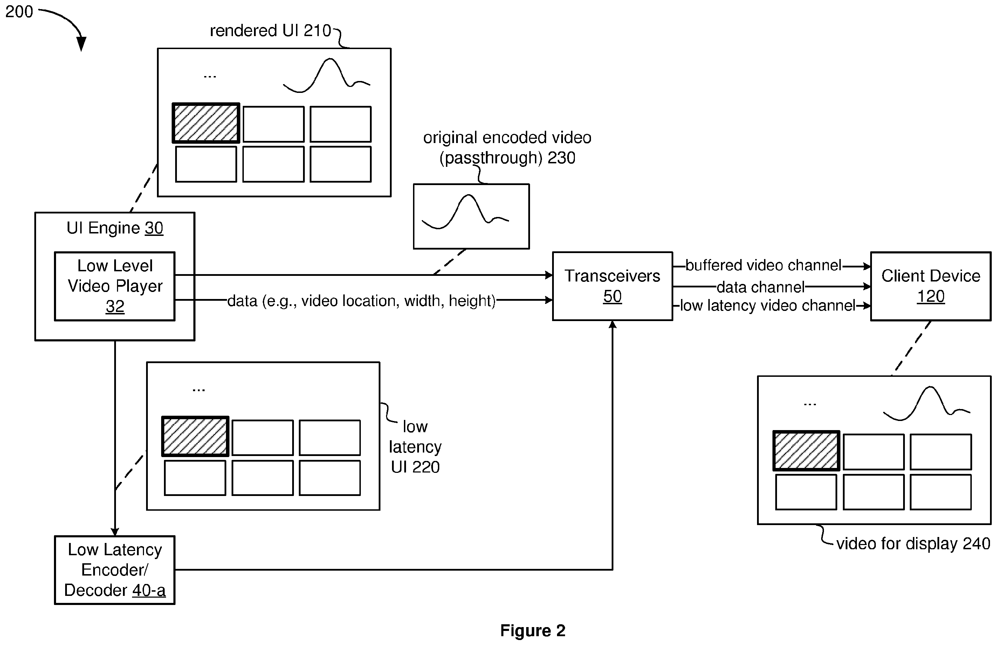

Figure 2 is a block diagram 200 illustrating one embodiment of multi-stream content delivery to low-end devices in the exemplary system 100 (Figure 1). As described above with reference to Figure 1, in some embodiments, the UI engine 30 on the server side renders UIs for the low-end client device 120 in the cloud, e.g., rendering a UI 210 that includes both low latency content and buffered content. For example, the exemplary UI 210 can be a catalog screen with tiles representing various media content for highlighting and selection. When a tile is highlighted as shown in Figure 2, embedded buffered content, such as a video 230 for preview, is played in the UI 210. As such, the rendered UI 210 includes an ABR video, such as the preview video, embedded in UI elements, such as the tiles in the rendered UI 210.

In some embodiments, as described above with reference to Figure 1, the UI engine 30 facilitates the generation of multiple streams, e.g., splitting one UI into multiple streams, and the transceivers 50 stream the multiple streams via multiple channels, each with different configurations. In some embodiments, among the multiple streams delivered to the client side via the multiple channels, the low latency stream delivered over the low latency channel allows the rendered UIs to react to user commands (e.g., scrolling, swipes, clicks, etc.) in real-time (or near real-time), while the buffered content delivered over the buffered video channel allows the visual/audio data associated with the embedded buffered content to recover from network disruptions for smooth and continuous playback.

In Figure 2, when preparing the UI 210, the UI engine 30 utilizes the low level video player 32 for playing the low latency UI 220 and sends the low latency UI 220 to a low latency encoder/decoder 40-a for encoding, e.g., sending to one of the encoders/decoders 40 (Figure 1). In some embodiments, the low latency encoder/decoder 40-a encodes the low latency UI 220 into a low latency stream for transmission to the client device 120 via the low latency video channel, e.g., encoding and compressing the low latency UI 220 for communication using WebRTC protocol. As such, the generation of the low latency content and the content delivery through the low latency video channel allow the server side to provide high responsiveness to UI interactions.

Also in Figure 2, in some embodiments, the low level video player 32 identifies display properties of the buffered content in the rendered UI 210, such as the video location, width, and height, etc., and sends the data representing the display properties to the transceivers 50 for transmission to the client device 120 via a data channel. In some embodiments, the original encoded video 230 for the preview is passed through (e.g., without further processing) by the low level video player 32 to the transceivers 50 for transmission to the client device 120 via a buffered video channel. The multi-stream setup allows the transceivers 50 to simultaneously deliver low latency content for UI responsiveness and buffered content for video playback that requires buffering for better resiliency, e.g., transmitting the multiple streams at the same time and/or signaling the synchronization of the multiple streams.

On the client side, the client device 120 handles each of the streams independently. In some embodiments, the client device 120 uses the information received from the signaling stream to decode the low latency stream and the buffered content stream. The client device then blends them together to form a combined video for display 240. Due to the low or no buffer configuration and/or the decoder configuration, content received through the low latency stream is presented in real-time (or near real-time), e.g., presenting a frame as soon as it is downloaded. In contrast, content received through the buffered content stream, such as an ABR video, is downloaded and buffered on the client device 120 to allow recovery from network interruptions for smooth quality. In some embodiments, the client device 120 receives the original encoded video 230 through the buffered video channel, downloads the original encoded video 230 to a buffer that has a depth greater than a threshold, e.g., one of the buffers 126 (Figure 1), and utilizes the buffered content decoder (e.g., one of the decoders 128 in Figure 1) to decode the buffered content.

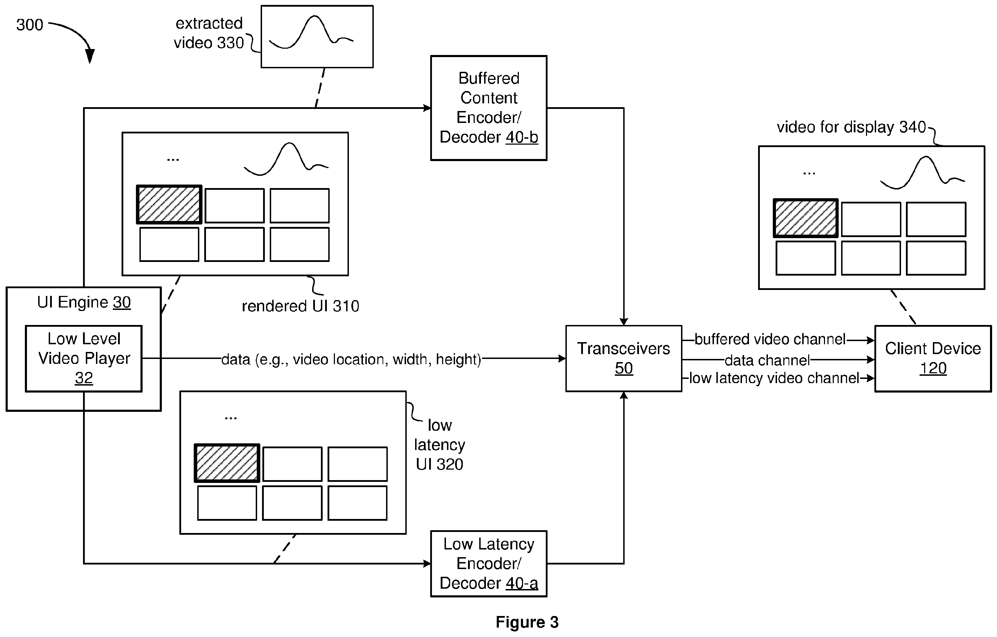

Figure 3 is a block diagram 300 illustrating another embodiment of multi-stream content delivery to low-end devices in the exemplary system 100 (Figure 1). The embodiment illustrated in Figure 3 is similar to and adapted from the embodiment illustrated in Figure 2. Accordingly, elements common to Figures 2 and 3 include common reference numbers, and only the differences between Figures 2 and 3 are described herein for the sake of brevity. While pertinent features are illustrated, those of ordinary skill in the art will appreciate from the present disclosure that various other features have not been illustrated for the sake of brevity and so as not to obscure more pertinent aspects of the implementations disclosed herein. Those of ordinary skill in the art will also appreciate from the present disclosure that the functions of the modules described below can be combined into one or more modules and/or further subdivided into additional sub-modules; and, that the modules described below are provided as merely one example configuration of the various aspects and functions described herein.

As a non-limiting example, in Figure 3, when preparing a rendered UI 310, the UI engine 30 utilizes the low level video player 32 for playing a low latency UI 320. In some embodiments, the low level video player 32 sends the low latency UI 320 to the low latency encoder/decoder 40-a for encoding. Similar to the embodiment shown in Figure 2, the low level video player 32 identifies display properties of the buffered content in the rendered UI 310, such as the video location, width, and height, etc., and sends the data representing the display properties to the transceivers 50 for transmission to the client device 120 via the signaling stream. Different from the embodiment shown in Figure 2, in some embodiments, the low level video player 32 in Figure 3 extracts a video 330 embedded in the rendered UI 310 and sends the extracted video 330 to a buffered content encoder/decoder 40-b, e.g., one of the encoders/decoders 40 (Figure 1). The buffered content encoder/decoder 40-b re-encodes the extracted video 330 to buffered content for streaming by one of the transceivers 50 via the buffered content stream. On the client side, the client device 120 handles the multi-stream content delivery the same way as in Figure 2, e.g., using the information received from the signaling stream to decode the low latency stream and the buffered content stream and blends them together to form a combined video for display 340.

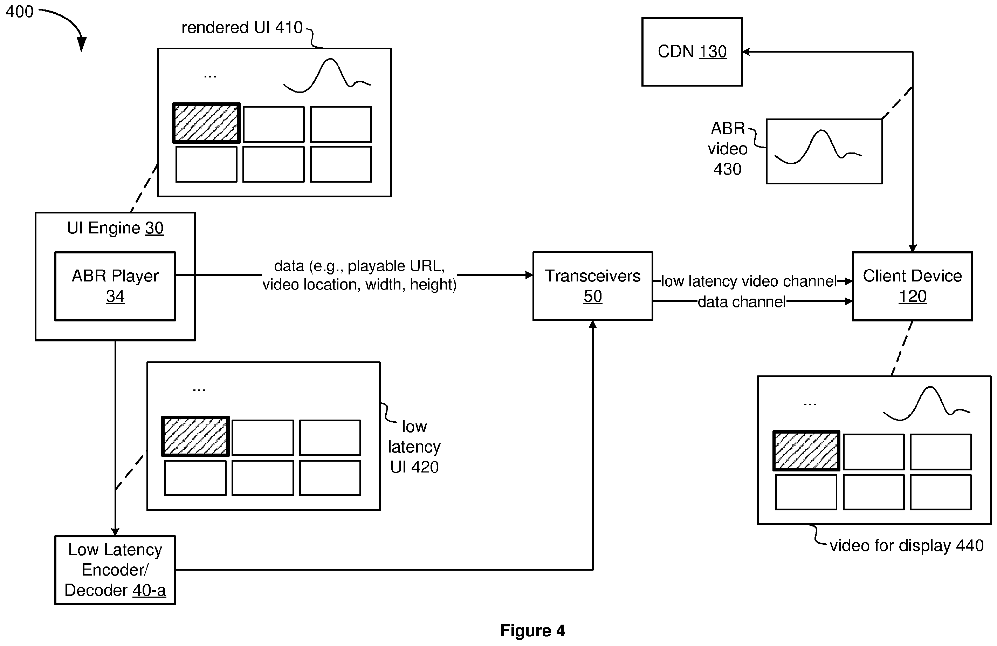

Figure 4 is a block diagram 400 illustrating another embodiment of multi-stream content delivery to low-end devices in the exemplary system 100 (Figure 1). The embodiment illustrated in Figure 4 is similar to and adapted from the embodiments illustrated in Figures 2 and 3. Accordingly, elements common to Figures 2-4 include common reference numbers, and only the differences between Figures 2-4 are described herein for the sake of brevity. Again, while pertinent features are illustrated, those of ordinary skill in the art will appreciate from the present disclosure that various other features have not been illustrated for the sake of brevity and so as not to obscure more pertinent aspects of the implementations disclosed herein. Those of ordinary skill in the art will also appreciate from the present disclosure that the functions of the modules described below can be combined into one or more modules and/or further subdivided into additional sub-modules; and, that the modules described below are provided as merely one example configuration of the various aspects and functions described herein.

As a non-limiting example, similar to the embodiments shown in Figures 2 and 3, in Figure 4, the UI engine 30 prepares a rendered UI 410 and uses the low latency encoder/decoder 40-a for encoding a low latency UI 420. The encoded low latency stream is then transmitted by the transceivers 50 via the low latency stream. Different from the embodiments shown in Figures 2 and 3, in some embodiments, when preparing the rendered UI 410, the UI engine 30 utilizes the ABR player 34 for playing the embedded video. Instead of playing the embedded video, the ABR player 34 identifies the display properties of the embedded video, including the playable URL corresponding to the embedded video, the video location, width, and height, etc., and sends the data representing the display properties to the transceivers 50 for transmission to the client device 120 via the signaling stream. On the client side, the receipt of the signaling stream causes the client device 120 to derive the playable URL from the display properties. In some embodiments, the client device 120 uses the information received from the signaling stream to decode the low latency stream. In some embodiments, the client device 120 also uses the information received from the signaling stream, such as the playable URL, to obtain an ABR video 430 from the CDN 130. In such embodiments, different from Figures 2 and 3, the signaling causes the client device 120 to request and obtain the buffered content stream from the CDN 120 and blend the low latency stream and the buffered content stream according to the display properties. As such, in Figure 4, the buffered content stream is delivered by the CDN 130 instead of the server 10 (Figure 1), and the client device 120 then blends the streams together to form a combined video for display 440.

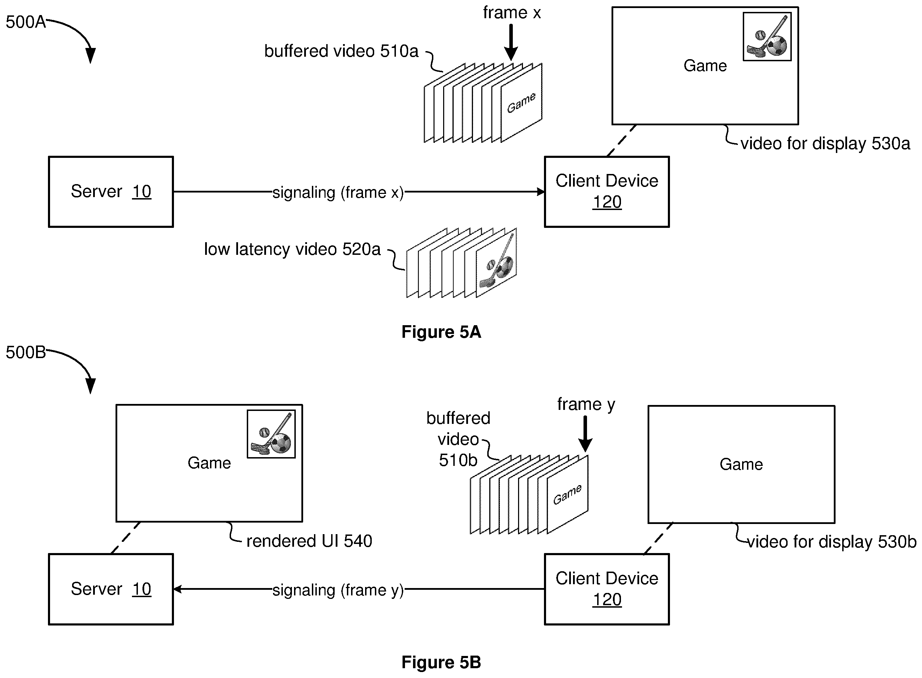

Figures 5A and 5B are diagrams 500A and 500B illustrating signaling for synchronization in the exemplary multi-stream content delivery system in accordance with some embodiments. In Figure 5A, in accordance with various embodiments described above with reference to Figures 1-4, the client device 120 obtains a buffered content stream 510a, such as a streaming video of a game, and a low latency stream 520a, such as an overlay of a banner or an advertisement. In some embodiments, as shown in Figure 5A, the server 10 signals to the client device 120 one or more frames, e.g., signaling frame x through the signaling stream as described above with reference to Figures 1-4. In response to receiving the signaling, in some embodiments, the client device 120 blends the buffered video 510a with the low latency video 520a starting from frame x to form a video for display 530a, e.g., presenting an overlay of the low latency content over the buffered content. As such, through the signaling from the server 10 to the client device 120, the low latency content and the buffered content are synchronized for blending at the client device 120.

In Figure 5B, in some embodiments, the server 10 receives signaling from the client device 120 when specific video frames have been presented. For example, in Figure 5B, when the client device 120 presents frame y from the buffered video 510 and/or another frame from the low latency stream, the client device 120 signals the server 10. In response, the server 10 prepares and delivers changes to the UI so that elements in the UI is synchronized with frame y. For example, in response to receiving the signaling that frame y has been presented, the server 10 prepares a rendered UI 540 that includes UI elements and the video of the game, where the UI elements correspond to content in the buffered stream, e.g., adding a banner or cheers to the UI when frame y shows a goal in the game, where the goal is detected via real time object recognition or frame y is bookmarked or tagged.

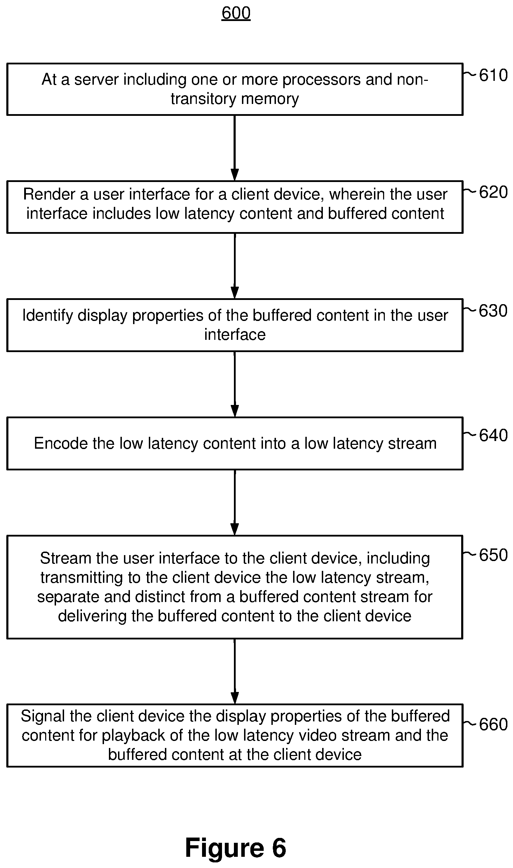

Figure 6 is a flowchart illustrating a method 600 for multi-stream content delivery to low-end devices in accordance with some embodiments. In some embodiments, as represented by block 610, the method 600 is performed at a server that includes one or more processors and non-transitory memory, e.g., the server 10 (Figure 1). In some embodiments, the server is located in a core network, distributed between a core network and an edge device, or on an edge device. As represented by block 620, the method 600 includes rendering a user interface for a client device, wherein the user interface includes low latency content and buffered content. For example, in Figures 2-4, each of the rendered UIs 210, 310, and 410 includes the low latency content, such as the catalog selection UI, interlaced with the buffered content, such as the video preview embedded in the UI elements.

As represented by block 630, the method 600 continues with the server identifying display properties of the buffered content in the user interface and encoding the low latency content into a low latency stream, as represented by block 640. As represented by block 650, the server further streams the user interface to the client device, including transmitting to the client device the low latency stream, separate and distinct from a buffered content stream for delivering the buffered content to the client device.

For example, as shown in Figures 2-4, the UI engine 30 identifies the display properties of the buffered content, such as the video location, width, height, and/or the playable URL, etc. Also shown in Figures 2-4, the low latency encoder/decoder 40-a encodes each of the low latency UIs 220, 320, and 420 into a low latency stream for transmission by the transceivers 50, e.g., via the low latency video channel. The buffered content, in some embodiments, on the other hand, is delivered via the buffered video channel as shown in Figures 2 and 3, which is different, separate, and distinct from the low latency video channel.

As represented by block 660, the method 600 continues with the server signaling the client device the display properties of the buffered content for playback of the low latency stream and the buffered content at the client device. For example, in Figures 2-4, the data representing the display properties are signaled to the client device 120 via the data channel. The client device 120 then uses such data to blend the low latency content and the buffered content to generate the videos for display 240, 340, and 440.

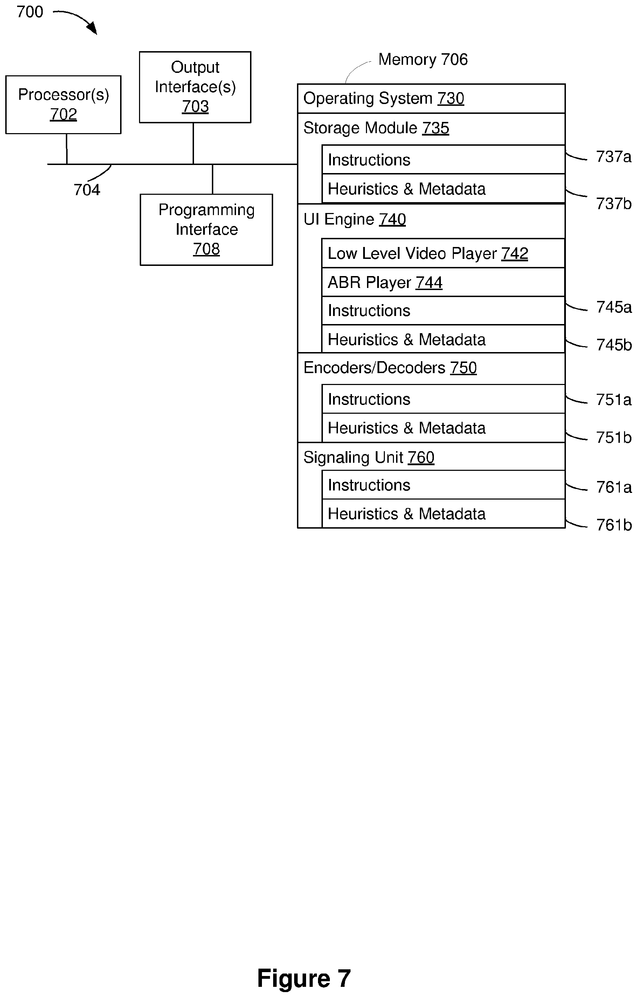

Figure 7 is a block diagram of a computing device 700 for multi-stream content delivery in accordance with some embodiments. In some embodiments, the computing device 700 corresponds to the server 10 and performs one or more of the functionalities described above performed by the signaling unit 20, the encoder/decoder 40, the UI engine 30, and the transceivers 50 with reference to Figures 1-4 and 5A-5B. While certain specific features are illustrated, those skilled in the art will appreciate from the present disclosure that various other features have not been illustrated for the sake of brevity, and so as not to obscure more pertinent aspects of the embodiments disclosed herein. To that end, as a non-limiting example, in some embodiments the computing device 700 includes one or more processing units 702 (e.g., CPU(s)/GPU(s) for image processing and/or rendering), one or more output interfaces 703 (e.g., one or more network interfaces for connecting with another computing device, such as the transceivers 50 in Figure 1), a memory 706, a programming interface 708, and one or more communication buses 704 for interconnecting these and various other components.

In some embodiments, the communication buses 704 include circuitry that interconnects and controls communications between system components. The memory 706 includes high-speed random access memory, such as DRAM, SRAM, DDR RAM or other random access solid state memory devices; and, in some embodiments, include non-volatile memory, such as one or more magnetic disk storage devices, optical disk storage devices, flash memory devices, or other non-volatile solid state storage devices. The memory 706 optionally includes one or more storage devices remotely located from the CPU(s) 702. The memory 706 comprises a non-transitory computer readable storage medium. Moreover, in some embodiments, the memory 706 or the non-transitory computer readable storage medium of the memory 706 stores the following programs, modules and data structures, or a subset thereof including an optional operating system 730, a storage module 735, a UI engine 740, encoders/decoders 750, and a signaling unit 760. In some embodiments, one or more instructions are included in a combination of logic and non-transitory memory. The operating system 730 includes procedures for handling various basic system services and for performing hardware dependent tasks.

In some embodiments, the storage module 735 is configured to store and/or manage data to facilitate the cloud UI rendering, encoding/decoding, video splitting, and/or signaling. To that end, the storage module 735 includes a set of instructions 737a and heuristics and metadata 737b.

In some embodiments, the UI engine 740 (e.g., the UI engine 30, Figure 1) is configured to render UIs in the cloud for client devices and split the rendered UIs into multiple streams. In some embodiments, the UI engine 740 includes a low level video player 742 (e.g., the low level video player 32 in Figures 1-3) for playing out and/or extracting low latency videos during UI rendering and/or composition and/or identifying display properties of the buffered content in the rendered UIs. In some embodiments, the UI engine 740 also includes an ABR player 744 for playing ABR videos to the UI engine 740 for UI composition and/or rendering, to facilitate the splitting of the content into multiple streams, and/or for identifying display properties of the buffered content in the rendered UIs. To that end, the UI engine 740 includes a set of instructions 745a and heuristics and metadata 745b.

In some embodiments, the encoders/decoders 750 (e.g., the encoder/decoder 34, Figure 1) re-encode and/or re-encrypt video content for UI composition and/or rendering encoding low latency content into a low latency video, and/or encoding buffered content into a buffered content video. To that end, the encoders/decoders 750 include a set of instructions 751a and heuristics and metadata 751b.

In some embodiments, the signaling unit 760 (e.g., the signaling unit 20, Figure 1) establishes and manages streams, connections, and/or sessions with client devices via the output interface(s). To that end, the signaling unit 760 includes a set of instructions 761a and heuristics and metadata 761b.

Although the storage module 735, the UI engine 740, the encoders/decoders 750, and the signaling unit 760 are illustrated as residing on a single computing device 700, it should be understood that in other embodiments, any combination of the storage module 735, the UI engine 740, the encoders/decoders 750, and the signaling unit 760 can reside in separate computing devices in various embodiments. For example, in some embodiments, each of the storage module 735, the UI engine 740, the encoders/decoders 750, and the signaling unit 760 resides on a separate computing device.

Moreover, Figure 7 is intended more as functional description of the various features which are present in a particular implementation as opposed to a structural schematic of the embodiments described herein. As recognized by those of ordinary skill in the art, items shown separately could be combined and some items could be separated. For example, some functional modules shown separately in Figure 7 could be implemented in a single module and the various functions of single functional blocks could be implemented by one or more functional blocks in various embodiments. The actual number of modules and the division of particular functions and how features are allocated among them will vary from one embodiment to another, and may depend in part on the particular combination of hardware, software and/or firmware chosen for a particular embodiment.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first device could be termed a second device, and, similarly, a second device could be termed a first device, which changing the meaning of the description, so long as all occurrences of the "first device" are renamed consistently and all occurrences of the "second device" are renamed consistently. The first device and the second device are both devices, but they are not the same device.

The terminology used herein is for the purpose of describing particular embodiments only and is not intended to be limiting of the claims. As used in the description of the embodiments and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting", that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

## Claims

1. A method comprising:
at a server including one or more processors and non-transitory memory:
rendering a user interface for a client device, wherein the user interface includes low latency content and buffered content;
identifying display properties of the buffered content in the user interface;
encoding the low latency content into a low latency stream;
streaming the user interface to the client device, including transmitting to the client device the low latency stream, separate and distinct from a buffered content stream for delivering the buffered content to the client device; and
signaling the client device the display properties of the buffered content for playback of the low latency content stream and the buffered content stream at the client device.

2. The method of claim 1, wherein the display properties include one or more of a location, a width, a height, and a playable URL of the buffered content in the user interface.

3. The method of either claim 1 or claim 2, wherein the low latency stream is encoded according to a first bitrate and the buffered content stream is encoded according to a second bitrate, different from the first bitrate.

4. The method of any preceding claim, further comprising:
configuring the low latency stream to have a buffer depth less than a threshold on the client device.

5. The method of any preceding claim, further comprising:
configuring the buffered content stream to be downloaded to allow buffering of the buffered content at the client device.

6. The method of any preceding claim, further comprising, triggering the client device to:
decode the low latency stream and the buffered content stream; and
blend the low latency stream and the buffered content stream according to the display properties.

7. The method of any preceding claim, further comprising:
obtaining an encoded video corresponding to the buffered content; and
passing through the encoded video as the buffered content stream to the client device.

8. The method of any preceding claim, further comprising:
extracting an embedded video as the buffered content from the rendered UI; and
re-encoding the embedded video into the buffered content stream prior to transmitting to the client device.

9. The method of any preceding claim, further comprising:
causing the client device to derive a URL from the display properties;
causing the client device to request and obtain the buffered content stream from a CDN according to the URL; and
causing the client device to blend the low latency stream and the buffered content stream according to the display properties.

10. The method of any preceding claim, further comprising:
signaling the client device a frame in the buffered content to start blending with the low latency stream.

11. The method of any preceding claim, wherein the rendering is performed in response to receiving from the client device signaling of a frame being presented at the client device.

12. A non-transitory memory storing one or more programs, which, when executed by a server with one or more processors, cause the server to perform the method of any one of the preceding claims.

13. A server comprising:
one or more processors;
a non-transitory memory;
a network interface; and
one or more programs, stored in the non-transitory memory, which, when executed by the one or more processors, cause the server to perform the method of any one of claims 1 to 11.
